(19) Europäisches Patentamt

European Patent Office

Office européen des brevets

(11) **EP 1 094 102 B1**

(12) **EUROPEAN PATENT SPECIFICATION**

(45) Date of publication and mention
of the grant of the patent:
**16.11.2005  Bulletin 2005/46**

(51) Int Cl.[7]: **C09K 11/64**, C09K 11/08,
C09K 11/80

(21) Application number: **00901921.7**

(22) Date of filing: **27.01.2000**

(86) International application number:
**PCT/JP2000/000402**

(87) International publication number:
**WO 2000/044852 (03.08.2000 Gazette 2000/31)**

(54) **LIGHT-EMITTING MATERIAL AND METHOD FOR PREPARING THE SAME**

LICHTEMITIERENDES MATERIAL UND METHODE ZUR HERSTELLUNG DESSELBEN

MATERIAU ELECTROLUMINESCENT ET PROCEDE DE PREPARATION DUDIT MATERIAU

(84) Designated Contracting States:
**AT BE CH CY DE DK ES FI FR GB GR IE IT LI LU MC NL PT SE**

(30) Priority: **28.01.1999  CN 99100285**

(43) Date of publication of application:
**25.04.2001  Bulletin 2001/17**

(73) Proprietors:
• **Chemitech Inc.**
  **Fuchu-shi, Tokyo 183-0023 (JP)**
• **Beijing Hualong Superglow Technology Development Co., Ltd.**
  **Beijing 100071 (CN)**
• **DAINIPPON INK AND CHEMICALS, INC.**
  **Itabashi-ku, Tokyo 174-8520 (JP)**

(72) Inventors:
• **H, Qinglong**
  **Peking 100072 (CN)**
• **LI, Pengcheng**
  **Peking 100072 (CN)**
• **XIU, Qian**
  **Peking 100072 (CN)**
• **OGURA, Atsushi**
  **Fuchu-shi, Tokyo 183-0023 (JP)**
• **GAO, Jingfeng**
  **Peking 100072 (CN)**

(74) Representative: **Hayes, Adrian Chetwynd et al**
**Boult Wade Tennant,**
**Verulam Gardens**
**70 Gray's Inn Road**
**London WC1X 8BT (GB)**

(56) References cited:
EP-A1- 0 622 440        EP-A1- 0 877 071
JP-A- 9 143 464         JP-A- 10 168 448
JP-A- 11 140 351        JP-A- 11 256 151
JP-A- 11 256 153        JP-A- 2000 001 672
US-A- 5 376 303

**Description**

TECHNICAL FIELD

The present invention relates to a light-emitting material and a production method therefor, and more particularly, to an organic light-emitting material using a rare-earth element as an exciting agent and having an afterglow time and a production method therefor.

BACKGROUND TECHNIQUE

A light-emitting material as utilized is mixed in ink or paint to make light emitting paint, and is utilized on safety signs and clock faces. Conventionally, copper-excited zinc sulfide (ZnS: Cu) has been widely used as the light-emitting material. ZnS: Cu has high light-emitting efficiency in the light-emitting spectral region, but its brightness is reduced extremely rapidly, and the visible afterglow time is as short as 20 to 30 minutes. When ZnS: Cu is exposed to ultraviolet rays in areas exposed to moisture, decomposition and degeneration are caused and the body color of the material darkens. Therefore, there are constraints on using ZnS: Cu internally, and an optimal material as a substitute for ZnS; Cu has long been sought.

In CN1053807A, a light-emitting material (m($Sr_{1-x}Eu_x$) $O \cdot nAl_2O_3-yB_2O_3$) having long afterglow ability is described. In the above general formula, $1 \leqq m \leqq 5$, $1 \leqq n \leqq 8$, $0.005 \leqq y \leqq 0.35$ and $0.001 \leqq x \leqq 0.1$. The afterglow time of this light-emitting material is in the range from 10 to 20 hours.

In USP 5,376,303, a phosphor having long afterglow ability comprises the composition (MO a ($Al_{1-b}B_b$) $_2O_3$: cR).

In this general formula, $0.5 \leqq a \leqq 10.0$, $0.0001 \leqq b \leqq 0.5$, $0.0001 \leqq c \leqq 0.2$, MO is at least one compound selected from the group consisting of MgO, CaO, SrO and ZnO. R consists of Eu and at least one additional rare-earth element selected from the group consisting of Pr, Nd, Dy and Tm.

In the above-mentioned patent, some phosphors such as SrO• 2.10 ($Al_{0.952}B_{0.048}$) $_2O_3$: 0.005Eu, 0.020Dy (which will be referred to as "A" hereinafter), and $SrO_{1.025}•(Al_{0.976}B_{0.024})_2O_3$: 0.005Eu, 0.015 Dy (which will be referred to as "B" hereinafter) were prepared, and the residual light-emitting time and brightness of these phosphors were evaluated for their afterglow time constant (n) and relative brightness (ZnS: Cu, C1 were evaluated). The measurement results show that the afterglow time constants of the A and B phosphors and ZnS: Cu, C1 are 0.94, 0.86 and 1.26, respectively, and the phosphorus brightnesses after 10 seconds are 144, 220 and 100, respectively, and the phosphorus brightnesses after 20 seconds are 934, 1320 and 100, respectively.

It was thus found that these materials are clearly improved as compared with ZnS: Cu, CI, but they are not yet in practical use.

Following the above, the present inventors conducted various researches for producing light-emitting materials using the rare-earth element Eu as the light-emitting material. Based on these researches, the present inventors found that a light-emitting material having a new crystallization structure was obtained by adding an appropriate amount of B and an additional exciting agent. This light-emitting material has desirably long afterglow time and high brightness.

Therefore, a first object of the present invention is to provide a production method for the above-mentioned light-emitting material having a long afterglow time and high brightness.

Moreover, a second object of the present invention is to provide a production method for the above-mentioned light-emitting material.

DISCLOSURE OF THE INVENTION

To achieve these objects, the present invention provides the following light-emitting material and production method.

That is, a light-emitting material of the present invention includes a two-phase crystalline compound expressed in the general formula:

$$(Sr, Eu, Dy)_{0.95 \pm x}(Al, B)_2O_{3.95 \pm x}.$$

$$(Sr, Eu, Dy)_{4-x}(Al,B)_{14}O_{25-x}, \qquad (x=0.01 \sim 0.1).$$

This new compound has a new crystallization structure and consists of two phases, i.e., $(Sr, Eu, Dy)_{0.95 \pm x}(A1, B)_2O_{3.95 \pm x}$ and $(Sr, Eu, Dy)_{4-x}(Al, B)_{14}O_{25-x}$.

This conclusion was obtained from XRD (X-ray diffraction) analysis using a Chinese geological university material scientific divisional crystallization structure and a large number of samples, carried out in a crystallization chemical laboratory. Based on the XRD analysis, and using an optical microscope and electronic probe analytical technique, it has been corroborated that the above two phases are co-existing and both of them have light-emitting function.

The production method for the light-emitting material includes the following steps:

(1) a step of measuring previously pulverized raw materials, and mixing them to obtain a mixture of the raw materials,
(2) a step of putting the mixture into a container, heating the mixture from 850°C to 1200°C for three hours under reducing conditions, maintaining the temperature at 1200°C for five to six hours, thereby obtaining a sintered body,
(3) a step of stopping the heating operation and cooling the sintered body naturally down to room temperature, and
(4) a step of pulverizing the sintered body to obtain a product.

According to the light-emitting material and the production method of the present invention, there is provided a light-emitting effect which has a visible long afterglow ability as compared with a similar light-emitting material.

BEST MODE FOR CARRYING OUT THE INVENTION

In an assessment process of a phase of a light-emitting material of the present invention, using analytical means such as X-rays, fluorescent analysis, plasma spectral analysis, electronic probes and X-ray photoelectron energy spectrum, it was confirmed that the content of the element B in the new compound is 0.2~1.0% by weight in general, and variable ranges of contents of elemental Eu and Dy are from 0.5 to 3.0% by weight and from 0.01 to 3.0% by weight, respectively.

The element B exists throughout the entire crystallization structure. Moreover, the element B exists in the form of B-O tetrahedral coordination or $BO_3$ triangular coordination. The $BO_3$ Triangular coordination can substitute a portion of the A1-O octahedron and this causes instability in the crystallization structure. This is an important structural feature of the light-emitting material of the present invention.

Further, the A1-O octahedron and A1-O tetrahedron concurrently exist in the new compound crystallization of the present invention, and form a substantially hexagonal ring and positive ions of Sr, Eu and Dy are charged into a cavity of the ring. In the new compound, A1 exists in excess (Sr,Eu,Dy) are deficient.

The raw materials which are used for the production method for the light-emitting material of the present invention are $SrCO_3$, $Al_2O_3$, $H_3BO_3$, $Eu_2O_3$ and $Dy_2O_3$, of which, Eu3+ of $Eu_2O_3$ is reduced by Eu2+ during the sintering process to excite the new compound and provide the same with a light-emitting function. $Dy_2O_3$ strengthens the exciting effect of $Eu_2O_3$ as an additional excitation agent.

The term "reducing conditions" used in the present specification means the reduction of the above-mentioned mixed raw material using carbon powder, or the reduction of the mixed raw material using a gaseous mixture of nitrogen and hydrogen of volume ratio 4:1. The light-emitting material produced by the invention has a faint yellow-green color. When this light-emitting material is irradiated with sunlight, a fluorescent light or other artificial light source and excited, the main peak of the light-emitting spectrum is 505 nm, and shows greenish blue.

As a result of measurement of samples, it was found that the light-emitting material of the present invention showed brightness of about 8500mcd/m$^2$ after five seconds from the instant when the irradiation was stopped, and the visible afterglow time was 80 hours or longer (see Table 1). The brightness at the 480th minute after stopping the irradiation is equal to 10 mcd/m$^2$ and it would take about 80 hours to decay down to 3 mcd/m$^2$. As shown in Table 1, the light-emitting material produced by the method of the present invention has an especially outstanding visible afterglow time.

The brightness is measured by the following method. That is, 0.2g of the sample is put on a plastic plate of 10 mm diameter and is irradiated for 15 minutes from a perpendicular distance of 20 cm using a fluorescent light of 15w at room temperature and under a humidity of 25RH%, and the brightness of each sample is measured at various points in time using an luminance meter (TOPCONBM-5, Japan TOPCON Inc.).

The light-emitting material produced by the method of the present invention has clearly a long afterglow time in comparison with other similar products. Therefore, this material can suitably be applied to articles or safety signs which need to be seen in the dark, for example, fireplugs or fire extinguishing tools and materials, handrails of safety stairs, and roads.

The following embodiments are for explaining the present invention in more detail, and are for exemplifying the invention.

First Embodiment

Previously pulverized 372.89g $SrCO_3$,220.32g $Al_2O_3$, 12.616 $H_3BO_3$, 2.42g $Eu_2O_3$, and 0.157g $Dy_2O_3$ were

measured and adequately mixed. The mixed raw material was put into a container and covered with carbon powder, and heated at from 850°C to 1200°C for three hours to increase its temperature, and the temperature was maintained for six hours at 1200°C. Then, the mixture was cooled down naturally to room temperature to obtain a sintered body. The sintered body obtained was pulverized into such small pieces that all the pieces could pass through a 200 mesh sieve, thereby obtaining the product. The product obtained in this manner had an initial brightness of 3850mcd/m$^2$ for 30 seconds and the afterglow time was 85 hours. In the product obtained, the value of x in the general formula was 0.01.

Second Embodiment

Previously pulverized 408.79g SrCO$_3$, 220.32g Al$_2$O$_3$, 12.616g H$_3$BO$_3$, 2.96g Eu$_2$O$_3$, and 0.164g Dy$_2$O$_3$ were measured and adequately mixed. The mixed raw material was put into a container and was covered with carbon powder, and heated at from 850°C to 1000°C for three hours to increase its temperature, and the temperature was maintained for six hours at 1000°C. Then, the mixture was cooled down naturally to room temperature to obtain a sintered body. The sintered body obtained was pulverized into such small pieces that all the pieces could pass through a 200 mesh sieve, thereby obtaining the product.
The product obtained in this manner had an initial brightness of 3990mcd/m$^2$ for 30 seconds and the afterglow time was 80 hours.
In the product obtained, the value of x in the general formula was 0.01.

Table 1

### Measurement of brightness (mcd/m$^2$) and calculation of standard deviation

| Time | Sample No. | | | | | Calculation of standard deviation | | |
|------|------|------|------|------|------|------|------|------|
|  | 1 | 2 | 3 | 4 | 5 | Average value | Standard deviation | Relative standard deviation |
| 5 s | 8400 | 8450 | 8400 | 8500 | 8500 | 8430 | 45 | 0.5% |
| 10 s | 7380 | 7570 | 7420 | 7410 | 7320 | 7460 | 125 | 1.8% |
| 20 s | 5120 | 5130 | 4930 | 5170 | 4870 | 5044 | 135 | 2.7% |
| 30 s | 4030 | 3960 | 3850 | 3990 | 3820 | 3930 | 91 | 2.3% |
| 40 s | 3380 | 3230 | 3160 | 3310 | 3110 | 3238 | 110 | 3.4% |
| 60 s | 2550 | 2490 | 2430 | 2490 | 2420 | 2476 | 53 | 2.1% |
| 90 s | 1870 | 1820 | 1780 | 1830 | 1750 | 1810 | 47 | 2.6% |
| 3min | 1520 | 1470 | 1460 | 1480 | 1420 | 1470 | 36 | 2.4% |
| 4 min | 870 | 850 | 840 | 840 | 820 | 844 | 18 | 2.1% |
| 5 min | 760 | 740 | 720 | 730 | 700 | 730 | 22 | 3.0% |
| 3 min | 630 | 630 | 610 | 610 | 590 | 614 | 17 | 2.8% |
| 15 min | 330 | 310 | 300 | 310 | 290 | 308 | 15 | 4.9% |
| 30 min | 160 | 150 | 140 | 140 | 130 | 144 | 15 | 8.3% |
| 60 min | 70 | 70 | 60 | 60 | 60 | 64 | 5.5 | 8.6% |
| 90 min | 50 | 40 | 40 | 50 | 40 | 44 | 5.5 | 12.5% |
| 120 min | 40 | 40 | 30 | 40 | 30 | 36 | 5.5 | 15.3% |
| 180 min | 20 | 30 | 20 | 20 | 20 | 22 | 4.5 | 20.5% |
| 240 min | 20 | 20 | 10 | 20 | 20 | 18 | 4.5 | 25.0% |
| 360 min | 20 | 10 | 10 | 20 | 10 | 14 | 5.5 | 33.6% |
| 480 min | 10 | 10 | 10 | 10 | 10 | 10 | 0 | 0 |

EP 1 094 102 B1

**Claims**

1. A light-emitting material comprising a two-phase crystalline compound that is expressed in the following general formula: $(Sr, Eu, Dy)_{0.95\pm x} (A1, B)_2 O_{3.95\pm x} \cdot (Sr, Eu, Dy)_{4-x} (Al, B)_{14} O_{25-x}$, wherein x=0.01 to 0.1, the content of the element B is 0.2 to 1.0 % by weight, the content of Eu is 0.5 to 3.0 % by weight and the content of Dy is 0.1 to 3.0 % by weight.

2. A light-emitting material according to claim 1, wherein the compound comprises the two co-existing phases: $(Sr, Eu, Dy)_{0.95\pm x}(Al,B)_2 O_{3.95\pm x}$ and $(Sr, Eu, Dy)_{4-x} (A1, B)_{14} O_{25-x}$.

3. A light-emitting material according to claim 1, wherein A1-O tetrahedrons and Al-O octahedrons concurrently exist in said compound.

4. A light-emitting material according to claim 1, wherein a part of the Al-O octahedron in the crystal structure of said compound is replaced by a $BO_3$ moiety having a triangular coordination.

5. A light-emitting material according to claim 1, wherein boron is present throughout the entire crystalline structure of the compound.

6. A production method for the light-emitting material of claim 1, comprising

   (1) a step of measuring previously pulverized raw materials, and mixing them to obtain a mixture of raw materials,
   (2) a step of putting the mixture into a container, heating the mixture from 850°C to 1200°C for three hours under reducing conditions, maintaining the temperature at 1200°C for five to six hours, thereby obtaining a sintered body,
   (3) a step of stopping the heating operation and cooling the sintered body naturally down to room temperature, and
   (4) a step for pulverizing the sintered body to obtain the product.

7. A production method for a light-emitting material, according to claim 6, wherein said previously pulverized raw materials are $SrCO_3$, $Al_2O_3$, $H_3BO_3$, $Eu_2O_3$ and $Dy_2O_3$.

8. A production method for a light-emitting material, according to claim 6 or 7, wherein in said step (2), reduction is carried out using carbon powder.

**Patentansprüche**

1. Licht-emittierendes Material, umfassend eine zweiphasige kristalline Verbindung, die ausgedrückt wird in der folgenden allgemeinen Formel: $(Sr, Eu, Dy)_{0.95\pm x} (Al, B)_2 O_{3.95\pm x} (Sr, Eu, Dy)_{4-x} (Al, B)_{14} O_{25-x}$, worin x = 0,01 bis 0,1 ist, wobei der Gehalt von Element B 0,2 bis 1,0 Gew.-% ist, der Gehalt von Eu 0,5 bis 3,0 Gew.-% ist und der Gehalt von Dy 0,1 bis 3,0 Gew.-% ist.

2. Licht-emittierendes Material nach Anspruch 1, worin die Verbindung die zwei nebeneinander vorliegenden Phasen umfasst:

   $(Sr, Eu, Dy)_{0.95\pm x} (Al, B)_2 O_{3.95\pm x}$ und
   $(Sr, Eu, Dy)_{4-x} (Al, B)_{14} O_{25-x}$.

3. Licht-emittierendes Material nach Anspruch 1, worin Al-O-Tetraeder und Al-O-Octaeder gleichzeitig in der Verbindung vorliegen.

4. Licht-emittierendes Material nach Anspruch 1, worin ein Teil des Al-O-Octaeders in der Kristallstruktur der Verbindung ersetzt ist durch eine $BO_3$-Gruppe mit einer Dreieckskoordination.

5. Licht-emittierendes Material nach Anspruch 1, worin Bor über die gesamte Kristallstruktur der Verbindung vorliegt.

**6.** Herstellungsverfahren für das Licht-emittierende Material nach Anspruch 1, umfassend

(1) einen Schritt zum Bemessen von zuvor pulverisierten Rohmaterialien und ihr Mischen, um ein Gemisch aus Rohmaterialien zu erhalten,
(2) einen Schritt zum Überführen des Gemischs in einen Behälter, Erhitzen des Gemischs von 850 °C auf 1200 °C für drei Stunden unter reduzierenden Bedingungen, Halten der Temperatur bei 1200 °C für fünf bis sechs Stunden, wobei ein gesinterter Körper erhalten wird,
(3) einen Schritt des Beendens des Erhitzungsschrittes und Abkühlenlassen Kühlen des gesinterten Körpers auf Raumtemperatur und
(4) einen Schritt des Pulverisierens des gesinterten Körpes, um das Produkt zu erhalten.

**7.** Herstellungsverfahren für ein Licht-emittierendes Material nach Anspruch 6, worin die zuvor pulverisierten Rohmaterialien $SrCO_3$, $Al_2O_3$, $H_3BO_3$, $Eu_2O_3$, und $Dy_2O_3$ sind.

**8.** Herstellungsverfahren für ein Licht-emittierendes Material nach Anspruch 6 oder 7, worin in dem Schritt (2) die Reduktion unter Verwendung von Kohlenstoffpulver durchgeführt wird.

**Revendications**

**1.** Matière photoémettrice comprenant un compose cristallin biphasique qui est représenté par la formule générale suivante : $(Sr, Eu, Dy)_{0,95\pm x} (Al, B)_2 O_{3,95\pm x} \cdot (Sr, Eu, Dy)_{4-x} (Al, B)_{14} O_{25-x}$, dans laquelle x a une valeur de 0,01 à 0,1, la teneur en élément B étant comprise entre 0,2 et 1,0 % en poids, la teneur en Eu étant comprise entre 0,5 et 3,0 % en poids et la teneur en Dy étant comprise entre 0,1 et 3,0 % en poids.

**2.** Matière photoémettrice suivant la revendication 1, dans laquelle le composé comprend les deux phases coexistantes :

$(Sr, Eu, Dy)_{0,95\pm x} (Al, B)_2 O_{3,95\pm x}$ et
$(Sr, Eu, Dy)_{4-x} (Al, B)_{14} O_{25-x}$.

**3.** Matière photoémettrice suivant la revendication 1, dans laquelle des tétrahèdres de Al-O et des octahèdres de Al-O existent conjointement dans ledit composé.

**4.** Matière photoémettrice suivant la revendication 1, dans laquelle une partie de l'octahèdre de Al-O dans la structure cristalline dudit composé est remplacée par un groupement $BO_3$ ayant une coordination triangulaire.

**5.** Matière photoémettrice suivant la revendication 1, dans laquelle du bore est présent dans la totalité de la structure cristalline du composé.

**6.** Procédé pour la production de la matière photoémettrice de la revendication 1, comprenant

(1) une étape de mesure de matières premières préalablement pulvérisées, et de leur mélange pour obtenir un mélange de matières premières,
(2) une étape d'introduction du mélange dans un récepteur, de chauffage du mélange de 850°C à 1200°C pendant trois heures dans des conditions réductrices, de maintien de la température à 1200°C pendant cinq à six heures, ce qui permet d'obtenir un corps fritté,
(3) une étape d'interruption de l'opération de chauffage et de refroidissement du corps fritté naturellement jusqu'à la température ambiante, et
(4) une étape de pulvérisation du corps fritté pour obtenir le produit.

**7.** Procédé pour la production d'une matière photoémettrice suivant la revendication 6, dans lequel lesdites matières premières préalablement pulvérisées sont $SrCO_3$, $Al_2O_3$, $H_3BO_3$, $Eu_2O_3$ et $Dy_2O_3$.

**8.** Procédé pour la production d'une matière photoémettrice suivant la revendication 6 ou 7, dans lequel, dans ladite étape (2), la réduction est effectuée en utilisant de la poudre de carbone.